# EUROPÄISCHE PATENTSCHRIFT

(11) **EP 3 647 887 B1**
(45) Veröffentlichungstag und Bekanntmachung des Hinweises auf die Patenterteilung: **05.01.2022**
(21) Anmeldenummer: 18203150.0
(22) Anmeldetag: 29.10.2018
(51) Int. Cl.: G05B 19/042, H04L 29/08, G06F 21/60

(54) **VERFAHREN UND VORRICHTUNG ZUR WEITERGABE EINER ZUGRIFFSINFORMATION FÜR EINEN ZUGRIFF AUF EIN FELDGERÄT DER PROZESSINDUSTRIE**
METHOD AND APPARATUS FOR THE TRANSMISSION OF AN ACCESS TOKEN FOR ACCESS TO A FIELD DEVICE USED IN THE PROCESSING INDUSTRY
PROCÉDÉ ET DISPOSITIF DE DIFFUSION D'INFORMATIONS D'ACCÈS POUR UN ACCÈS À UN APPAREIL DE TERRAIN DE L'INDUSTRIE DE TRANSFORMATION

(43) Veröffentlichungstag der Anmeldung: 06.05.2020
(73) Patentinhaber: VEGA Grieshaber KG, 77709 Wolfach (DE)
(72) Erfinder: FAIST, Fridolin, 77709 Oberwolfach (DE); HUMMEL, Jakob, 79215 Elzach (DE); HÖLL, Ralf, 79822 Titisee-Neustadt (DE)
(74) Vertreter: Maiwald Patent- und Rechtsanwaltsgesellschaft mbH

(56) Entgegenhaltungen:
- WO-A1-2017/121928
- WO-A2-02/052767
- DE-A1-102012 109 348
- DE-A1-102013 111 690

## Beschreibung

### Gebiet der Erfindung

Die Erfindung betrifft allgemein das Gebiet der Prozessautomation und/oder Prozessindustrie. Im Speziellen betrifft die Erfindung ein Verfahren zur Weitergabe einer Zugriffsinformation für einen Zugriff auf ein Feldgerät der Prozessautomation und/oder Prozessindustrie über ein Bediengerät eines Benutzers an einen weiteren Benutzer. Ferner betrifft die Erfindung ein entsprechendes Bediengerät und ein Programmelement zur Durchführung dieses Verfahrens. Des Weiteren betrifft die Erfindung ein Verfahren zur Weitergabe einer Zugriffsinformation für einen Zugriff auf ein Feldgerät der Prozessautomation über einen Server an einen weiteren Benutzer sowie einen entsprechenden Server und ein Programmelement zur Durchführung dieses Verfahrens.

### Hintergrund der Erfindung

Feldgeräte werden in der Prozessautomation und/oder Prozessindustrie vielfach zum Überwachen und/oder Ermitteln von einer oder mehreren Prozessvariablen und/oder Messgrößen eingesetzt. Beispielsweise können Feldgeräte zur Bestimmung eines Drucks eines Mediums, eines Füllstands eines Mediums, eines Durchflusses eines Mediums, einer Fließgeschwindigkeit eines Mediums, einer Temperatur und/oder anderer Prozessvariablen eingesetzt werden.

Zunehmend sind Feldgeräte untereinander und/oder mit anderen Bediengeräten, wie beispielsweise Computern, Smartphones, PCs, Laptops und/oder Servern, vernetzt. In vielen Fällen können die Feldgeräte dabei über hierarchisch höher gelegene Netzwerke und/oder über Internetverbindungen mittels solcher Bediengeräte bedient werden. Dadurch können auch Feldgeräte Angriffen von Hackern ausgesetzt sein. Um diesem Umstand entgegenzuwirken, sind regelmäßig Sicherheitsmechanismen in den Feldgeräten und/oder in den mit den Feldgeräten vernetzten Bediengeräten vorgesehen. Derartige Sicherheitsmechanismen können von einer einfachen Bediensperre für die Vorort-Bedienung der Feldgeräte, etwa über ein Display mit Tasten, bis hin zu verschlüsselter Kommunikation mit Authentifizierungsverfahren und gegebenenfalls nachgelagerter Zugriffssperre auf die Feldgeräte reichen. Auch können zur Steigerung der Sicherheit Zugriffsinformationen für einen Zugriff auf Feldgeräte auf einem Server hinterlegt sein und beispielsweise auf ein Bediengerät übertragen werden, so dass dem Bediengerät der Zugriff auf die Feldgeräte ermöglicht werden kann.

Um eine Anlage mit einem oder mehreren Feldgeräten sicher betrieben zu können und die Feldgeräte vor Fremdzugriff schützen zu können, kann es erforderlich sein, dass ein Benutzer die in den Feldgeräten implementierten Authentifizierungsverfahren, Benutzerverwaltungen und/oder weitere Zugriffsschutzfunktionen aktiviert. Dadurch kann es jedoch auch erforderlich sein, allen Benutzern der Feldgeräte, die sich Zugriff auf die Feldgeräte verschaffen wollen, Zugriffsinformationen für einen Zugriff auf die Feldgeräte mitzuteilen. Solche Zugriffsinformationen können beispielsweise verschiedenen PINs, Benutzernamen, Kennwörter oder dergleichen umfassen.

Ein derartiges Vorgehen mag überschaubar bleiben, sofern verhältnismäßig wenige Feldgeräte eingesetzt werden, es kann jedoch unübersichtlich werden, wenn eine Anlage und/oder ein Gerätepark mit einer Vielzahl von Feldgeräten von einer Vielzahl von Benutzern verwaltet und/oder bedient werden soll.

Um dem zu begegnen, kann insbesondere vorgesehen sein, jedem Benutzer auf dessen Bediengerät, mit welchem die Feldgeräte bedient werden können, alle Zugriffsinformationen für alle Feldgeräte der Anlage lokal auf dem Bediengerät zur Verfügung zu stellen. Eine solche Speicherung der Zugriffsinformationen auf Bediengeräten kann dabei zum Beispiel in Form einer Zuordnungstabelle von Zugriffsinformationen, etwa PINs und/oder Kennwörtern, zu Seriennummern der Feldgeräte erfolgen. Hierbei kann auch vorgesehen sein, dass ein Benutzer, wenn er sich zum wiederholten Male über das zugehörige Bediengerät mit einem Feldgerät verbindet, die erforderliche Zugriffsinformation für einen Zugriff auf das Feldgerät nicht mehr auf dem Bediengerät eingeben muss.

Oftmals besitzen Benutzer von Feldgeräten mehrere Rechenvorrichtungen, etwa mehrere Bediengeräte, Smartphones, Tablet-PCs, Bedienrechner oder dergleichen, zum Bedienen der Feldgeräte. Dies kann für jede Rechenvorrichtung bzw. jedes Bediengerät die Eingabe und/oder Hinterlegung der Zugriffsinformationen für die Feldgeräte erfordern. Auch kann sich dadurch eine unterschiedlich gute Abdeckung der Zugriffsinformationen auf jedem der Bediengeräte ergeben, was mit einem erhöhten Aufwand für den Benutzer und/oder einen Betreiber der Anlage einhergehen kann.

Um dem zu begegnen, werden mitunter Server eingesetzt, auf welchen Benutzerkonten für die Benutzer hinterlegt sein können, wobei die Benutzerkonten zur Verwaltung der Zugriffsinformationen für Feldgeräte dienen können. Ein Benutzer kann sich so mit einem Bediengerät auf dem Server anmelden, etwa an dem Benutzerkonto des Benutzers, um so Zugriff auf die auf dem Server hinterlegten Zugriffsinformationen zu erlangen.

Derartige Lösung und/oder Konzepte ermöglichen es jedoch nicht, die einem Benutzer zugeordneten ("persönlichen") Zugriffsinformationen für Feldgeräte mit weiteren Benutzern, wie beispielsweise Service-Mitarbeitern und/oder Mitarbeitern innerhalb einer Firma, etwa für einen Zugriff auf Feldgeräte in gesicherten Anlagenteile, zu teilen, Zugriffsinformationen an weitere Benutzer weiterzugeben und/oder den weiteren Benutzern Zugriffsberechtigung zu erteilen.

Dokument WO 2017/121928 A1 beschreibt ein industrielles Automatisierungssystem und ein Verfahren zum Bereitstellen von Diensten über Komponenten des Automatisierungssystems.

Dokument WO 02/052767 A2 beschreibt ein Proxysystem zum Bereitstellen und Berechtigen einer alternativen Entität zur Durchführung von Operationen bei Abwesenheit einer ersten Entität.

### Zusammenfassung der Erfindung

Mit Ausführungsformen der vorliegenden Erfindung kann in vorteilhafter Weise ein verbessertes Verfahren zur Weitergabe und/oder Erteilung einer Zugriffsinformation für einen Zugriff auf ein Feldgerät der Prozessautomation, ein verbessertes Bediengerät und/oder ein verbesserter Server zur Durchführung des Verfahrens bereitgestellt werden.

Dies wird insbesondere durch die Gegenstände der unabhängigen Patentansprüche ermöglicht. Weiterbildungen der Erfindung ergeben sich aus den Unteransprüchen und der nachfolgenden Beschreibung.

Die nachfolgende Beschreibung betrifft mitunter eine Wechselwirkung zwischen wenigstens einem Bediengerät zur Bedienung eines oder mehrere Feldgeräte und einem Server, mit welchem das wenigstens eine Bediengerät kommunizieren kann. Das von dem Bediengerät durchgeführte Verfahren ist unter anderem in Patentanspruch 1 spezifiziert und das von dem Server durchgeführte Verfahren ist unter anderem in Patentanspruch 16 spezifiziert. Auch betrifft die nachfolgende Beschreibung ein Bediengerät und einen Server. Die folgende Offenbarung gilt somit gleichermaßen für das Verfahren aus Sicht des Bediengeräts, das Verfahren aus Sicht des Servers, das Bediengerät und den Server. Insbesondere ist anzumerken, dass die Verfahren aus Sicht des Bediengeräts und aus Sicht des Servers zu einem gemeinsamen Verfahren kombiniert werden können.

Ein Aspekt betrifft ein Verfahren zur Weitergabe, zur Verleihung, zum Teilen und/oder zum Vergeben einer Zugriffsinformation für einen Zugriff auf ein Feldgerät der Prozessautomation und/oder der Prozessindustrie. Die Weitergabe der Zugriffsinformation kann hierbei über ein Bediengerät eines Benutzers an einen weiteren Benutzer und/oder ein weiteres Bediengerät des weiteren Benutzers erfolgen. Das Verfahren weist die folgenden Schritte auf:
- Festlegen, an einem Bediengerät eines Benutzers, wenigstens einer für den Benutzer erteilten Zugriffsinformation für einen Zugriff auf wenigstens ein Feldgerät über das Bediengerät des Benutzers;
- Zuordnen , an dem Bediengerät des Benutzers, eines weiteren Benutzers zu der festgelegten wenigstens einen Zugriffsinformation; und
- Senden einer Zugriffsfreigabe, welche Informationen bezüglich der festgelegten wenigstens einen Zugriffsinformation und bezüglich des der festgelegten Zugriffsinformation zugeordneten weiteren Benutzers umfasst, von dem Bediengerät an einen Server, so dass dem weiteren Benutzer basierend auf der Zugriffsfreigabe die wenigstens eine Zugriffsinformation, etwa über den Server, bereitgestellt werden kann.

Der Benutzer des Bediengeräts kann auf dem Server und/oder auf dem Bediengerät eine oder mehrere Zugriffsinformationen für den Zugriff auf eines oder mehrere Feldgeräte auswählen und dem Server die Zugriffsfreigabe für den weiteren Benutzer senden. Dies ermöglicht in vorteilhafter Weise, dass der Benutzer Zugriffsinformationen an den weiteren Benutzer weitergeben, dem weiteren Benutzer freigeben und/oder mitteilen kann. Der Benutzer kann hier und im Folgenden einen ersten Benutzer mit einem ersten Bediengerät und der weitere Benutzer kann einen zweiten Benutzer mit einem zweiten Bediengerät bezeichnen, welche sich voneinander unterscheiden können. Sämtliche nachfolgend beschriebene Merkmale des Bediengeräts des Benutzers gelten gleichermaßen für das weitere Bediengerät des weiteren Benutzers.

Das erfindungsgemäße Verfahren ermöglicht insbesondere beliebigen und/oder beliebig vielen Benutzern individuell Zugriffsinformationen für Feldgeräte mit anderen Benutzern zu teilen und/oder diesen zu verleihen. Je nach Status des weiteren Benutzers, wie beispielsweise eines Service-Mitarbeiters, welcher unter Umständen beschränkten Zugriff auf Feldgeräte erhalten soll, oder eines weiteren Mitarbeiters, der unbeschränkten Zugriff erhalten soll, kann der Benutzer über das Bediengerät individuell Zugriffsinformationen mit dem/den weiteren Benutzer(n) teilen.

Bei dem Feldgerät kann es sich um ein beliebiges Feldgerät zur Bestimmung einer beliebigen Prozessvariable und/oder Messgröße handeln. Beispielsweise kann es sich bei dem Feldgerät um ein Füllstandmessgerät zur Erfassung eines Füllstandes eines Mediums, etwa in einem Behälter, um ein Druckmessgerät zur Erfassung eines Druckes des Mediums, um ein Durchflussmessgerät zur Erfassung eines Durchflusses des Mediums, um ein Fließgeschwindigkeitsmessgerät zur Erfassung einer Fließgeschwindigkeit des Mediums, um ein Temperaturmessgerät und/oder um ein beliebiges anderes Feldgerät handeln.

Bei dem Bediengerät kann es sich grundsätzlich um ein beliebiges Endgerät handeln, welches mit dem Feldgerät eine Kommunikationsverbindung herstellen kann. Das Bediengerät und das Feldgerät können dabei voneinander unabhängige und/oder separate Vorrichtungen sein. Beispielsweise kann das Bediengerät ein tragbares und/oder mobiles Bediengerät sein. Alternativ oder zusätzlich kann das Bediengerät ein Tablet-PC, ein Smartphone, ein Laptop und/oder ein Computer sein. Auch kann das Bediengerät beispielsweise als Datenbrille ausgestaltet sein. Das Bediengerät kann insbesondere für eine drahtlose Kommunikation mit dem Feldgerät eingerichtet sein. Alternativ oder zusätzlich kann das Bediengerät jedoch auch für eine drahtgebundene Kommunikation mit dem Feldgerät eingerichtet sein. Zur Verbindung mit dem Feldgerät kann das Bediengerät über wenigstens ein Kommunikationsmodul verfügen, welches eine Kommunikationsverbindung, etwa eine Ethernet-, eine LAN- (Local Area Network), eine WLAN- (Wireless Local Area Network), eine GPRS- (General Packet Radio Service), eine Mobilfunk-, eine LTE-(Long Term Evolution), eine 3G-, eine NBIoT-, eine LPWAN-, eine Lora-, eine Bluetooth-, eine 4...20mA und/oder eine Infrarot-Verbindung, herstellen kann. Auch kann das Bediengerät über einen Feldbus, wie beispielsweise einen HART Bus, einen Profibus, einen FF-Bus, einen Modbus, einen PROFINET-Bus, einen IP basierten Bus, einen Ethernet-IP-Bus, einen seriellen Bus und/oder einen parallelen Bus mit dem Feldgerät (und/oder mit dem Server) verbunden werden. Auch andere Verbindungen, z.B. über einen IO-Link und/oder eine USB-Verbindung, sind denkbar.

Der Server kann eine oder mehrere Rechenvorrichtung aufweisen. Der Server kann auch ein Servernetzwerk, etwa eine Cloud, oder eine beliebige andere Rechenvorrichtung bezeichnen. Insbesondere kann der Server über ein Netzwerk und/oder eine Internetverbindung mit dem Bediengerät kommunizieren, Daten und/oder Signale austauschen. Das Bediengerät und/oder der Server können hierzu eines oder mehrere Kommunikationsmodule zum Herstellen einer Kommunikationsverbindung, analog den voranstehend beschriebenen Kommunikationsverbindungen zwischen Bediengerät und Feldgerät, aufweisen.

Das Bediengerät kann eine Benutzerschnittstelle für Benutzereingaben durch den Benutzer aufweisen. Unter Verwendung der Zugriffsinformation für ein Feldgerät kann das Bediengerät mit dem Feldgerät verbunden und/oder gekoppelt werden, etwa in Folge einer Benutzereingabe durch den Benutzer.

Die Zugriffsinformation kann beispielsweise wenigstens eine Zugriffskennung zur Freigabe einer Bedienung des wenigstens einen Feldgeräts durch das Bediengerät umfassen. Die Freigabe der Bedienung kann beispielsweise ein Aufheben einer Bediensperre des Feldgeräts umfassen. Dies kann eine Bedienung des Feldgeräts über das Bediengerät ermöglichen. Beispielsweise können so Diagnosedaten, Messdaten, Parametrierdaten, Softwareinformationen, und/oder beliebige andere Daten von dem Feldgerät abgerufen und/oder zwischen Bediengerät und Feldgerät ausgetauscht werden. Auch kann hierdurch eine Steuerung und/oder Kontrolle des Feldgeräts über das Bediengerät ermöglicht werden. Die Zugriffskennung kann beispielsweise eine PIN, ein Zahlencode, ein Buchstabencode, ein Zahlen-Buchstabencode und/oder eine andere Kennung sein, bei deren Eingabe über das Bediengerät das Feldgerät freigegeben werden kann. Auch kann vorgesehen sein, dass durch Eingabe der Zugriffskennung das Feldgerät gesperrt werden kann.

Alternativ oder zusätzlich kann die Zugriffsinformation wenigstens eine Verbindungskennung zum Herstellen einer Kommunikationsverbindung zu dem wenigstens einen Feldgerät umfassen. Die Kommunikationsverbindung kann etwa eine Bluetoothverbindung, eine Netzwerkverbindung und/oder eine Feldbusverbindung sein. Die Verbindungskennung kann etwa eine PIN, ein Zahlencode, ein Buchstabencode, ein Zahlen-Buchstabencode und/oder eine andere Kennung zum Herstellen einer der Kommunikationsverbindung sein. Auch kann die Verbindungskennung ein PSK (Pre-Shared Key) sein, mit Hilfe dessen das Bediengerät mit einem Netzwerk verbunden werden kann, an welches auch das Feldgerät angebunden sein kann.

Die Zugriffsinformation für den Zugriff auf ein Feldgerät kann die Zugriffskennung für die Freigabe des Feldgeräts und/oder die Verbindungskennung zum Herstellen der Kommunikationsverbindung umfassen. Basierend auf der Zugriffsinformation kann der Benutzer Zugriff auf das Feldgerät erlangen und ein Fremdzugriff auf das Feldgerät kann effektiv vermieden werden.

Das erfindungsgemäße Verfahren kann vorsehen, dass ein Benutzer über ein Bediengerät eine oder mehrere Zugriffsinformationen für ein oder mehrere Feldgeräte auswählen kann, welche er mit wenigstens einem weiteren Benutzer teilen möchte. Die wenigstens eine Zugriffsinformation kann hierbei lokal auf dem Bediengerät des Benutzers in einem Speicher hinterlegt sein und lokal, etwa mittels einer App auf dem Bediengerät, verwaltet werden. Alternativ oder zusätzlich kann die wenigstens eine Zugriffsinformation auf dem Server hinterlegt sein und etwa über eine Internetverbindung und/oder Netzwerkverbindung zu dem Server über das Bediengerät ausgewählt werden. Beispielsweise kann auf dem Server ein Benutzerkonto für den Benutzer hinterlegt sein, bei welchem er sich über das Bediengerät anmelden kann, um so die ihm erteilten und/oder zugeordneten Zugriffsinformationen verwalten zu können. Beispielsweise kann über ein Browserfenster auf dem Bediengerät eine von dem Server bereitgestellte Verwaltung von Zugriffsinformationen, etwa in Form einer Liste, angezeigt und/oder gesteuert werden. Zum Anmelden an das Benutzerkonto auf dem Server kann der Benutzer über die Benutzerschnittstelle des Bediengeräts beispielsweise eine Email-Adresse und/oder einen Benutzernamen sowie gegebenenfalls ein Passwort oder eine andere Kennung eingeben.

Das Bediengerät und/oder der Server kann ferner dazu eingerichtet sein, die Zugriffsinformationen, welche lokal auf dem Bediengerät hinterlegt sind, und die Zugriffsinformationen, welche dem Benutzer auf dem Server zugeordnet sind (etwa die Zugriffsinformationen, welche mit dem Benutzerkonto des Benutzers auf dem Server verknüpft sind) zu synchronisieren und/oder abzugleichen. Dadurch kann sichergestellt sein, dass der Benutzer stets einen vollständigen Satz von ihm zugeordneten Zugriffsinformationen für die ihm zugeordneten Feldgeräte auf dem Bediengerät und/oder auf dem Server zur Verfügung hat.

Nach Auswahl einer oder mehrerer Zugriffsinformationen kann der Benutzer über das Bediengerät einen weiteren Benutzer und/oder ein weiteres Bediengerät festlegen und/oder den festgelegten Zugriffsinformation(en) zuordnen, um diese mit dem weiteren Benutzer zu teilen. Ferner kann der Benutzer die Zugriffsfreigabe, welche Informationen und/oder Daten bezüglich der festgelegten wenigstens einen Zugriffsinformation und bezüglich des der festgelegten Zugriffsinformation zugeordneten weiteren Benutzers (und/oder weiteren Bediengeräts) umfassen, von dem Bediengerät an den Server senden. Dies kann den Server veranlassen, basierend auf der Zugriffsfreigabe die festgelegte(n) Zugriffsinformation(en) für den weiteren Benutzer freizugeben und/oder diesem zuzuordnen. Dadurch kann/können die von dem Benutzer festgelegten Zugriffsinformation(en) dem weiteren Benutzer bereitgestellt und/oder zur Verfügung gestellt werden. Der weitere Benutzer kann so die festgelegte(n) Zugriffsinformation(en) über den Server erhalten. Hierzu kann sich der weitere Benutzer an einem ihm zugeordneten Benutzerkonto auf dem Server anmelden. Optional kann der weitere Benutzer die Zugriffsinformation(en) auch auf das weitere Bediengerät laden und etwa in einem Speicher hinterlegen.

Gemäß einer Ausführungsform weist das Verfahren ferner einen Schritt des Anmeldens, über das Bediengerät des Benutzers, an einem dem Benutzer zugeordneten Benutzerkonto auf dem Server auf, wobei in dem Benutzerkonto eine oder mehrere Zugriffsinformationen für einen Zugriff des Benutzers auf ein oder mehrere Feldgeräte verwaltet sind. Die Zugriffsinformation(en) und/oder die zugehörigen Feldgeräte können mit dem Benutzerkonto des Benutzers auf dem Server verknüpft sein. Gleichsam kann/können die Zugriffsinformation(en) über das Benutzerkonto auf dem Server dem Benutzer zugeordnet sein. Dies ermöglicht, dass der Benutzer sich über mehrere Bediengeräte an seinem Benutzerkonto anmelden kann und stets einen vollständigen Satz von Zugriffsinformationen zur Verfügung hat. Nach Anmelden an dem Benutzerkonto über ein beliebiges Bediengerät können die dem Benutzerkonto des Benutzers zugeordneten Zugriffsinformationen auf das jeweilige Bediengerät heruntergeladen und/oder mit den dort lokal gespeicherten Zugriffsinformationen abgeglichen und/oder synchronisiert werden.

Gemäß einer Ausführungsform weist das Verfahren ferner einen Schritt des Bereitstellens, auf dem Bediengerät des Benutzers, einer Liste einer Mehrzahl von Zugriffsinformationen für einen Zugriff auf eine Mehrzahl von Feldgeräten über das Bediengerät auf, wobei der Schritt des Festlegens der wenigstens einen für den Benutzer erteilten Zugriffsinformation ein Auswählen und/oder Markieren, auf dem Bediengerät des Benutzers, der wenigstens einen für den Benutzer erteilten Zugriffsinformation in der Liste umfasst. Beispielsweise kann die Liste Einträge mit den Feldgeräten, etwa Seriennummern der Feldgeräte und/oder weitere Einträge aufweisen. Über die Liste kann der Benutzer auf einfache Weise die ihm zugewiesenen und/oder erteilten Zugriffsinformationen bzw. Feldgeräte verwalten. Dies kann das Teilen von Zugriffsinformationen mit dem weiteren Benutzer vereinfachen.

Gemäß einer Ausführungsform ist die Liste in einem Speicher des Bediengeräts des Benutzers hinterlegt. Alternativ oder zusätzlich wird die Liste über eine Internetverbindung und/oder Netzwerkverbindung des Bediengerät zu dem Server bereitgestellt, etwa in einem Browserfenster auf dem Bediengerät. Hierzu kann sich der Benutzer beispielsweise an seinem Benutzerkonto auf dem Server anmelden.

Gemäß einer Ausführungsform weist das Verfahren ferner einen Schritt des Zuordnens, Festlegens und/oder Definierens wenigstens eines Nutzerattributs zu der festgelegten wenigstens einen Zugriffsinformation auf, wobei das wenigstens eine Nutzerattribut eine Nutzungsberechtigung der festgelegten wenigstens einen Zugriffsinformation durch den und/oder für den weiteren Benutzer definiert. Dabei umfasst die von dem Bediengerät an den Server gesendete Zugriffsfreigabe ferner Informationen bezüglich des wenigstens einen Nutzerattributs. Mit anderen Worten kann der Benutzer der festgelegten Zugriffsinformation, welche dem weiteren Benutzer zur Verfügung gestellt werden soll, wenigstens ein Nutzerattribut zuordnen, welche eine Nutzungsberechtigung der festgelegten Zugriffsinformation festlegt. Die Nutzungsberechtigung kann dabei als Berechtigungsstufe aufgefasst werden, so dass dem weiteren Benutzer individuell eine Berechtigungsstufe für die Nutzung der Zugriffsinformation zugewiesen werden kann. Handelt es sich bei dem weiteren Benutzer beispielsweise um einen Service-Techniker, so kann über das Nutzerattribut eine beschränkte Nutzungsberechtigung für die Nutzung der Zugriffsinformation zugeordnet werden. Handelt es sich bei dem weiteren Benutzer hingegen beispielsweise um einen weiteren Mitarbeiter, so kann über das Nutzerattribut eine unbeschränkte Nutzungsberechtigung für die Zugriffsinformation definiert werden. Dies kann eine Flexibilität des Verfahrens zur Weitergabe von Zugriffsinformation im Hinblick auf einen Status des weiteren Benutzers signifikant steigern.

Gemäß einer Ausführungsform umfasst die in dem wenigstens einen Nutzerattribut definierte Nutzungsberechtigung wenigstens ein Element ausgewählt aus der Gruppe bestehend aus:
- einer dauerhaften, permanenten und/oder zeitlich unbegrenzten Berechtigung zur Nutzung der festgelegten Zugriffsinformation durch den weiteren Benutzer;
- einer temporären und/oder zeitlich begrenzten Berechtigung zur Nutzung der festgelegten Zugriffsinformation durch den weiteren Benutzer;
- einer Berechtigung zur Nutzung der festgelegten Zugriffsinformation durch den weiteren Benutzer ohne Berechtigung zur Einsichtnahme der festgelegten Zugriffsinformation durch den weiteren Benutzer, so dass der weitere Benutzer die Zugriffsinformation nicht einsehen kann und/oder dem weiteren Benutzer die Zugriffsinformation verborgen bleibt, er sie jedoch dennoch zur Freigabe des Feldgeräts verwenden kann;
- einer Berechtigung zur Nutzung der festgelegten Zugriffsinformation durch den weiteren Benutzer mit Berechtigung zur Einsichtnahme der festgelegten Zugriffsinformation durch den weiteren Benutzer; und
- einer Berechtigung zur Veränderung der festgelegten Zugriffsinformation durch den weiteren Benutzer.

Alternativ oder zusätzlich kann die in dem wenigstens einen Nutzerattribut definierte Nutzungsberechtigung vorsehen, dass der weitere Benutzer die Zugriffsinformation nicht verändern darf. Alternativ oder zusätzlich kann die in dem wenigstens einen Nutzerattribut festgelegte Nutzungsberechtigung eine Berechtigung zum Teilen und/oder Weitergeben der Zugriffsinformation durch den weiteren Benutzer an Dritte bzw. an weitere Benutzer umfassen. Ebenso kann die in dem Nutzerattribut festgelegte Nutzungsberechtigung vorsehen, dass der weitere Benutzer die Zugriffsinformation nur selbst nutzen kann, jedoch nicht weitergeben darf. Insgesamt können damit die Zugriffsinformationen sicher und flexibel an weitere Benutzer weitergegeben werden.

Das Teilen, Weitergeben und/oder Verleihen von Zugriffsinformationen gemäß dem erfindungsgemäßen Verfahren kann daher eine dauerhafte und/oder beschränkte, etwa eine zeitlich begrenzte, Nutzung der Zugriffsinformation durch den weiteren Benutzer ermöglichen. Insgesamt kann so eine umfassende, flexible und einfache Möglichkeit zur Weitergabe von Zugriffsinformationen an Dritte bereitgestellt werden, so dass die Zugriffsinformationen beispielsweise über eine Anwendung, eine Software, eine Softwareanwendung, und/oder eine App auf einem (weiteren) Bediengerät zur Bedienung von Feldgeräten von beliebigen (weiteren) Benutzern genutzt werden können.

Gemäß einer Ausführungsform weist der Schritt des Zuordnens des weiteren Benutzers zu der festgelegten wenigstens einen Zugriffsinformation ein Zuordnen einer Email-Adresse des weiteren Benutzers auf. Alternativ oder zusätzlich kann das Verfahren einen Schritt des Sendens einer Benachrichtigung an den weiteren Benutzer und/oder an eine dem weiteren Benutzer zugeordnete Email-Adresse vorsehen. Eine solche Benachrichtigung kann beispielsweise von dem Bediengerät des Benutzers an die dem weiteren Benutzer zugeordnete Email-Adresse gesendet werden.

Alternativ oder zusätzlich kann die von dem Bediengerät an den Server gesendete Zugriffsfreigabe ferner Informationen bezüglich der Email-Adresse des weiteren Benutzers umfassen, wobei das Senden der Zugriffsfreigabe von dem Bediengerät an den Server den Server zum Senden einer Benachrichtigung an die dem weiteren Benutzer zugeordnete Email-Adresse veranlasst. Das Festlegen der Email-Adresse des weiteren Benutzers kann beispielsweise ermöglichen, dass der Server die festgelegte Zugriffsinformation mit dem Benutzerkonto des weiteren Benutzers auf dem Server verknüpfen kann, etwa wenn für das Benutzerkonto des weiteren Benutzers die Email-Adresse des weiteren Benutzers auf dem Server hinterlegt ist. Alternativ oder zusätzlich zur Email-Adresse kann auch eine beliebige andere Kennung zur Identifizierung des weiteren Benutzers verwendet werden. Das Senden der Benachrichtigung kann ferner ermöglichen, dass der weitere Benutzer Kenntnis davon erhält, dass der Benutzer eine oder mehrere Zugriffsinformationen weitergegeben und/oder mit ihm geteilt hat.

Gemäß einer Ausführungsform weist das Verfahren ferner einen Schritt des Sendens, mit dem Bediengerät an den Server, einer Zugriffsentziehung zum Aufheben einer Nutzungsberechtigung der wenigstens einen Zugriffsinformation durch den weiteren Benutzer auf. Mit anderen Worten kann die für den weiteren Benutzer freigegebene Zugriffsinformation dem weiteren Benutzer auch wieder entzogen werden. Insbesondere kann dadurch vermieden werden, dass die Zugriffsinformationen verändert werden müssen, wenn sichergestellt sein soll, dass der weitere Benutzer keinen Zugriff mehr auf die Zugriffsinformation erhalten soll. Dadurch kann insgesamt eine Sicherheit für die Nutzung von Zugriffsinformationen gesteigert sein.

Ein weiterer Aspekt betrifft ein Bediengerät, welches dazu eingerichtet ist, Schritte des Verfahrens, so wie voranstehend und nachfolgend beschrieben, auszuführen. Das Bediengerät kann beispielsweise einen Speicher aufweisen, in welchem Softwareinstruktionen hinterlegt sein können, die bei deren Ausführung, etwa auf einer Steuereinheit und/oder einem Prozessor des Bediengeräts, das Bediengerät dazu veranlassen und/oder anleiten, Schritte des Verfahrens, so wie voranstehend und nachfolgend beschrieben, auszuführen. In dem Speicher können auch eine oder mehrere Zugriffsinformationen hinterlegt sein. Auch kann auf dem Bediengerät eine Anwendung, Software und/oder App ausgeführt werden, über welche ein Zugriff auf das Benutzerkonto auf dem Server und/oder ein Zugriff auf eines oder mehrere Feldgeräte ermöglicht wird.

Merkmale, Elemente und/oder Funktionen des Bediengeräts, so wie voranstehend und nachfolgend beschreiben, können Merkmale, Elemente und/oder Schritte des Verfahrens, so wie voranstehend und nachfolgend beschrieben, sein und umgekehrt. Ein weiterer Aspekt betrifft ein Programmelement, das, wenn es von einem Bediengerät und/oder einer Steuereinheit eines Bediengeräts ausgeführt wird, das Bediengerät veranlasst und/oder anleitet, Schritte des Verfahrens, so wie voranstehend und nachfolgend beschrieben, durchzuführen.

Ein weiterer Aspekt betrifft ein computerlesbares Medium, auf welchem ein Programmelement hinterlegt ist, das, wenn es von einem Bediengerät und/oder einer Steuereinheit eines Bediengeräts ausgeführt wird, das Bediengerät veranlasst und/oder anleitet, Schritte des Verfahrens, so wie voranstehend und nachfolgend beschrieben, durchzuführen

Ein weiterer Aspekt betrifft ein Verfahren zur Weitergabe einer Zugriffsinformation für einen Zugriff auf ein Feldgerät der Prozessautomation .

Das nachfolgend beschriebene Verfahren kann etwa die Weitergabe von Zugriffsinformationen aus Sicht des Servers darstellen, und mit dem voranstehend erläuterten Verfahren kombiniert werden. Das Verfahren weist die folgenden Schritte auf:
- Empfangen einer von einem Bediengerät eines Benutzers gesendeten Zugriffsfreigabe mit einem Server, auf welchem wenigstens eine Zugriffsinformation für einen Zugriff auf wenigstens ein Feldgerät hinterlegt ist, wobei die Zugriffsfreigabe Informationen bezüglich der wenigstens einen Zugriffsinformation und bezüglich eines der wenigstens einen Zugriffsinformation zugeordneten weiteren Benutzers umfasst;
- Erstellen und/oder Hinterlegen, auf dem Server, einer Nutzungsberechtigung basierend auf der empfangenen Zugriffsfreigabe für den der wenigstens einen Zugriffsinformation zugeordneten weiteren Benutzer; und
- Bereitstellen der wenigstens einen Zugriffsinformation von dem Server an den weiteren Benutzer .

Gemäß einer Ausführungsform umfasst die empfangene Zugriffsfreigabe ferner Informationen bezüglich wenigstens eines der wenigstens einen Zugriffsinformation und/oder dem weiteren Benutzer zugeordneten Nutzerattributs, wobei die Nutzungsberechtigung basierend auf dem wenigstens einen Nutzerattribut auf dem Server erstellt und/oder hinterlegt wird. Der Server kann etwa die Zugriffsfreigabe verarbeiten und/oder von der Zugriffsfreigabe das wenigstens eine Nutzerattribut ableiten. Basierend auf dem Nutzerattribut kann der Server sodann die Nutzungsberechtigung, beispielsweise gleichsam einer Berechtigungsstufe, zuordnen. Hierzu kann der Server das Nutzerattribut und/oder die dadurch definierte Nutzungsberechtigung der festgelegten Zugriffsinformation und/oder dem weiteren Benutzer zuordnen.

Gemäß einer Ausführungsform umfasst die Nutzungsberechtigung wenigstens ein Element ausgewählt aus der folgenden Gruppe bestehend aus:
- einer dauerhaften, permanenten und/oder zeitlich unbegrenzten Berechtigung zur Nutzung der wenigstens einen Zugriffsinformation durch den weiteren Benutzer;
- einer temporären und/oder zeitlich begrenzten Berechtigung zur Nutzung der wenigstens einen Zugriffsinformation durch den weiteren Benutzer;
- einer Berechtigung zur Nutzung der wenigstens einen Zugriffsinformation durch den weiteren Benutzer ohne Berechtigung zur Einsichtnahme der wenigstens einen Zugriffsinformation durch den weiteren Benutzer, so dass dem weiteren Benutzer die Zugriffsinformation verborgen bleibt, er sie jedoch dennoch zur Bedienung eines Feldgeräts nutzen kann;
- einer Berechtigung zur Nutzung der wenigstens einen Zugriffsinformation durch den weiteren Benutzer mit Berechtigung zur Einsichtnahme der wenigstens einen Zugriffsinformation durch den weiteren Benutzer; und
- einer Berechtigung zur Veränderung der wenigstens einen Zugriffsinformation durch den weiteren Benutzer.

Alternativ oder zusätzlich kann die über das Nutzerattribut definierte Nutzungsberechtigung vorsehen, dass der weitere Benutzer die Zugriffsinformation nicht verändern darf. Alternativ oder zusätzlich kann die über das Nutzerattribut definierte Nutzungsberechtigung vorsehen, dass der weitere Benutzer die Zugriffsinformation weitergeben darf oder nicht.

Gemäß einer Ausführungsform umfasst der Schritt des Bereitstellens der wenigstens einen Zugriffsinformation an den weiteren Benutzer ein Senden der wenigstens einen Zugriffsinformation von dem Server an ein weiteres Bediengerät des weiteren Benutzers. Alternativ oder zusätzlich umfasst der Schritt des Bereitstellens der wenigstens einen Zugriffsinformation an den weiteren Benutzer ein Ermöglichen eines Zugriffs des weiteren Benutzers auf die auf dem Server hinterlegte wenigstens eine Zugriffsinformation über ein weiteres Bediengerät des weiteren Benutzers. Mitanderen Worten kann der weitere Benutzer die für ihn freigegebene Zugriffsinformation von dem Server auf das weitere Bediengerät laden und/oder über eine Internetverbindung (und/oder Netzwerkverbindung) des weiteren Bediengeräts mit dem Server Zugriff auf die Zugriffsinformation erhalten. Alternativ oder zusätzlich kann der Server die Zugriffsinformation aktiv an den weiteren Benutzer und/oder das weitere Bediengerät senden, etwa in Form einer Push-Nachricht. Auch kann vorgehsehen sein, dass beispielsweise nach Anmeldung des weiteren Benutzers an einem ihm zugeordneten Benutzerkonto auf dem Server Zugriffsinformationen auf dem weiteren Bediengerät und die freigegebene Zugriffsinformation(en) auf dem Server abgeglichen und/oder synchronisiert werden.

Gemäß einer Ausführungsform ist auf dem Server ein Benutzerkonto des weiteren Benutzers hinterlegt, wobei der Schritt des Bereitstellens der wenigstens einen Zugriffsinformation an den weiteren Benutzer ein Verknüpfen, durch den Server, der wenigstens einen Zugriffsinformation mit dem Benutzerkonto des weiteren Benutzers umfasst.

Gemäß einer Ausführungsform umfasst der Schritt des Bereitstellens der wenigstens einen Zugriffsinformation an den weiteren Benutzer ein Anmelden des weiteren Benutzers an einem auf dem Server hinterlegten Benutzerkonto des weiteren Benutzers über ein weiteres Bediengerät des weiteren Benutzers, welches über eine Internetverbindung und/oder Netzwerkverbindung mit dem Server verbunden ist. Zum Anmelden an dem Benutzerkonto kann etwa eine Email-Adresse des weiteren Benutzers und/oder ein Benutzername des weiteren Benutzers sowie ein Passwort oder eine beliebige andere Kennung erforderlich sein.

Gemäß einer Ausführungsform umfasst die von dem Bediengerät des Benutzers von dem Server empfangene Zugriffsberechtigung ferner Informationen bezüglich einer Email-Adresse des weiteren Benutzers, wobei der Schritt des Bereitstellens der wenigstens einen Zugriffsinformation an den weiteren Benutzer ein Senden einer Benachrichtigung von dem Server an die Email-Adresse des weiteren Benutzers umfasst. Damit kann der weitere Benutzer davon in Kenntnis gesetzt werden, dass der Benutzer ihm die wenigstens eine Zugriffsinformation zur Verfügung gestellt hat.

Gemäß einer Ausführungsform weist das Verfahren ferner die folgenden Schritte auf:
- Empfangen, mit dem Server, einer von dem Bediengerät des Benutzers gesendeten Zugriffsentziehung; und
- Aufheben, durch den Server, der Nutzungsberechtigung der wenigstens einen Zugriffsinformation durch den weiteren Benutzer basierend auf der empfangenen Zugriffsentziehung.

Es kann daher vorgesehen sein, eine für den weiteren Benutzer freigegebene Zugriffsinformation dem weiteren Benutzer wieder zu entziehen. Dies kann flexibel durch den Benutzer und/oder das Bediengerät des Benutzers erfolgen. Dadurch kann auch eine Änderung von Zugriffsinformationen, etwa bei einem Personalwechsel, vermieden werden.

Gemäß einer Ausführungsform weist das Verfahren ferner einen Schritt des Aufhebens einer Verknüpfung der wenigstens einen Zugriffsinformation mit einem auf dem Server hinterlegten Benutzerkonto des weiteren Benutzers auf. Der Server kann etwa als Antwort und/oder in Reaktion auf Erhalt einer Zugriffsentziehung von dem Benutzer und/oder dessen Bediengerät die Verknüpfung der Zugriffsinformation mit dem Benutzerkonto des weiteren Benutzers aufheben und/oder löschen, so dass der weitere Benutzer keinen Zugriff mehr auf die Zugriffsinformation erhält.

Gemäß einer Ausführungsform weist das Verfahren ferner einen Schritt des Sendens eines Löschungsbefehls an das weitere Bediengerät des weiteren Benutzers zum Löschen der wenigstens einen Zugriffsinformation auf dem weiteren Bediengerät des weiteren Benutzers auf. Über den Löschungsbefehl kann der Server beispielsweise aktiv die Zugriffsinformation von dem weiteren Bediengerät löschen. Alternativ oder zusätzlich kann vorgesehen sein, dass diejenige Zugriffsinformation(en), welche dem weiteren Benutzer nicht mehr zur Verfügung gestellt werden soll(en), bei der nächsten Anmeldung des weiteren Benutzers an seinem Benutzerkonto auf dem Server von dem weiteren Bediengerät gelöscht wird/werden, etwa im Rahmen einer Synchronisierung und/oder eines Abgleichs der auf dem weiteren Bediengerät und der auf dem Server für den weiteren Benutzer freigegebenen Zugriffsinformation(en).

Ein weiterer Aspekt betrifft einen Server, der dazu eingerichtet ist, Schritte des Verfahrens, so wie voranstehend und nachfolgend beschrieben, durchzuführen. Der Server kann beispielsweise einen Speicher aufweisen, in welchem Softwareinstruktionen hinterlegt sein können, die bei deren Ausführung, etwa auf einer Steuereinheit und/oder einem Prozessor des Servers, den Server dazu veranlassen und/oder anleiten, Schritte des Verfahrens, so wie voranstehend und nachfolgend beschrieben, auszuführen. In dem Speicher können auch eine oder mehrere Zugriffsinformationen für einen Zugriff auf wenigstens ein Feldgerät hinterlegt sein. Auch können in dem Speicher eines oder mehrere Benutzerkonten für einen oder mehrere Benutzer hinterlegt sein. Dabei kann/können in jedem Benutzerkonto die dem zugehörigen Benutzer zugeordnete(n) und/oder für diesen freigegebene(n) Zugriffsinformation(en) hinterlegt sein. Auch kann auf dem Server eine Anwendung, Software und/oder App ausgeführt werden, über welche ein Zugriff auf das jeweilige Benutzerkonto über ein entsprechendes Bediengerät ermöglicht wird.

Merkmale, Elemente und/oder Funktionen des Servers, so wie voranstehend und nachfolgend beschreiben, können Merkmale, Elemente und/oder Schritte des Verfahrens, so wie voranstehend und nachfolgend beschrieben, sein und umgekehrt. Auch können Merkmale und/oder Elemente des Servers Merkmale und/oder Elemente des Bediengeräts und umgekehrt.

Ein weiterer Aspekt betrifft ein Programmelement, das, wenn es von einem Server und/oder einer Steuereinheit eines Servers ausgeführt wird, den Server veranlasst und/oder anleitet, Schritte des Verfahrens, so wie voranstehend und nachfolgend beschrieben, durchzuführen.

Ein weiterer Aspekt betrifft ein computerlesbares Medium, auf welchem ein Programmelement hinterlegt ist, das, wenn es von einem Server und/oder einer Steuereinheit eines Servers ausgeführt wird, den Server veranlasst und/oder anleitet, Schritte des Verfahrens, so wie voranstehend und nachfolgend beschrieben, auszuführen.

Ein weiterer Aspekt betrifft ein System mit einem oder mehreren Bediengeräten, wie voranstehend und nachfolgend beschrieben, und einem Server, wie voranstehend und nachfolgend beschrieben. Das System kann dazu eingerichtet sein, die Verfahren wie voranstehend und nachfolgend beschrieben, durchzuführen. Optional kann das System eines oder mehrere Feldgeräte aufweisen, wie voranstehend und nachfolgend beschrieben.

Im Folgenden werden Ausführungsbeispiele der Erfindung unter Bezugnahme auf die Figuren beschrieben.

### Kurze Beschreibung der Figuren

Fig. 1A zeigt schematisch ein Bediengerät gemäß einem Ausführungsbeispiel.
Fig. 1B zeigt schematisch ein Feldgerät gemäß einem Ausführungsbeispiel.
Fig. 1C zeigt schematisch einen Server gemäß einem Ausführungsbeispiel.
Fig. 2 zeigt schematisch ein System mit mehreren Bediengeräten gemäß Figur 1A, mehreren Feldgeräten gemäß Figur 1B und einem Server gemäß Figur 1C.
Fig. 3 zeigt schematisch ein System zur Illustration von Schritten eines Verfahrens gemäß einem Ausführungsbeispiel.
Fig. 4 zeigt ein Flussdiagramm zur Illustration von Schritten eines Verfahrens gemäß einem Ausführungsbeispiel.
Fig. 5 zeigt ein Flussdiagramm zur Illustration von Schritten eines Verfahrens gemäß einem Ausführungsbeispiel.

Ähnliche, ähnlich wirkende, gleiche oder gleich wirkende Elemente in den Figuren werden mit ähnlichen oder gleichen Bezugszeichen versehen. Die Figuren sind lediglich schematische und nicht maßstabsgetreu.

### Detaillierte Beschreibung von Ausführungsbeispielen

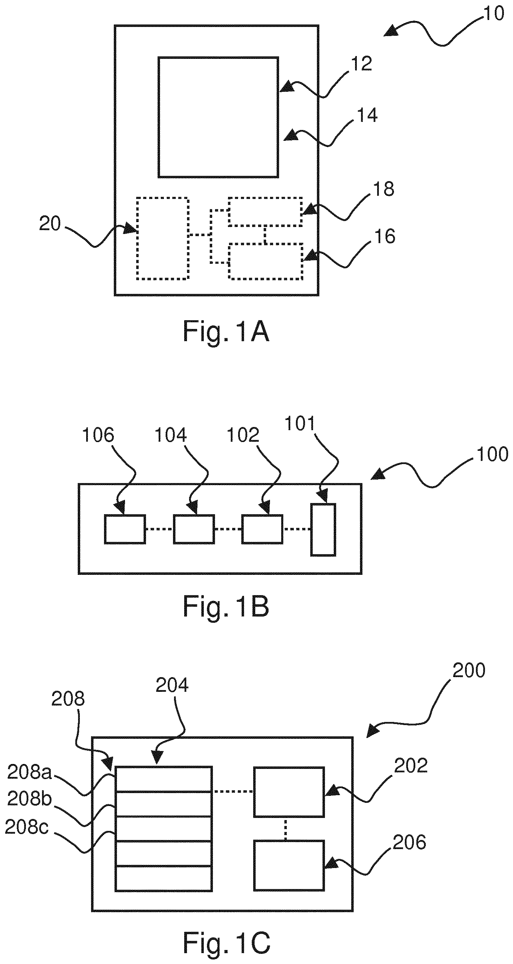

Figur 1A zeigt schematisch ein Bediengerät 10 gemäß einem Ausführungsbeispiel.

Das Bediengerät 10 der Figur 1 ist exemplarisch als Smartphone 10 ausgestaltet. Bei dem Bediengerät 10 kann es sich jedoch alternativ um einen PC, einen Tablet-PC, einen Computer, ein Laptop und/oder ein beliebiges anderes Endgerät, beispielsweise eine Datenbrille, handeln.

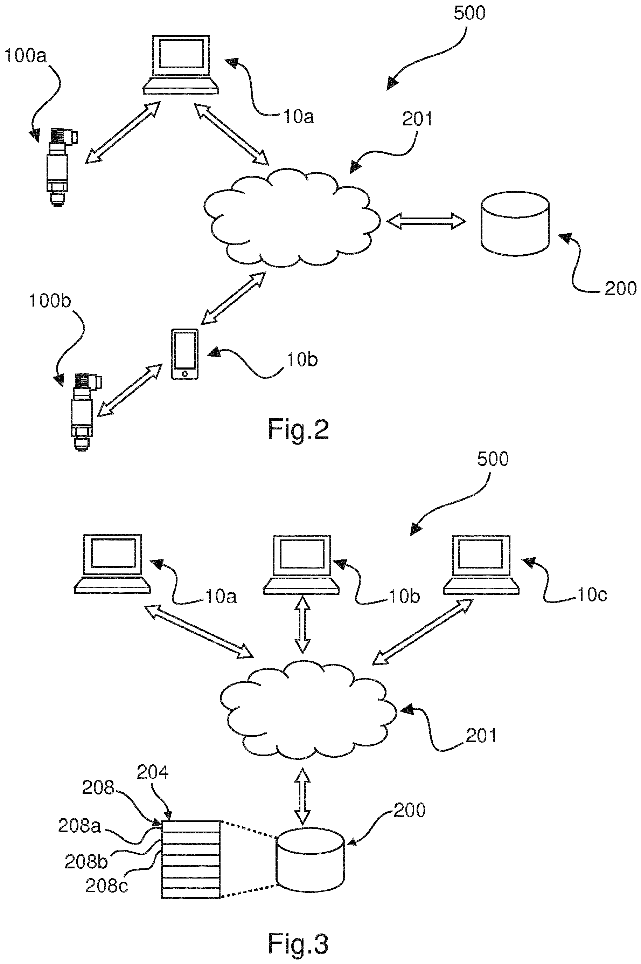

Das Bediengerät 10 weist eine Benutzerschnittstelle 12 zur Eingabe von Benutzereingaben durch einen Benutzer des Bediengeräts 10 auf. Des Weiteren weist das Bediengerät 10 eine Anzeige 14 und/oder ein Display 14 auf, über welches etwa eine oder mehrere Zugriffsinformationen für einen Zugriff auf eines oder mehrere Feldgeräte 100 (siehe Figur 2) dargestellt und/oder verwaltet werden kann/können. Das Display 14 und die Benutzerschnittstelle 12 können kombiniert sein, etwa in Form eines Touch-Displays.

Das Bediengerät 10 verfügt ferner über eine Steuereinheit 16, welche beispielsweise einen oder mehrere Prozessoren aufweisen kann, und einen Speicher 18. In dem Speicher 20 können Softwareinstruktionen, ein Programmelement, ein Programm und/oder eine App hinterlegt sein, die bei deren Ausführung durch die Steuereinheit 18 das Bediengerät 10 veranlassen, Schritte des Verfahrens, so wie voranstehend und nachfolgend beschrieben, durchzuführen.

Ferner weist das Bediengerät 10 ein Kommunikationsmodul 20 zum Herstellen einer Kommunikationsverbindung zu einem oder mehreren Feldgeräten 100 und/oder zum Herstellen einer Kommunikationsverbindung zu einem Server 200 (siehe z.B. Figuren 1C, 2 und 3) auf. Das Kommunikationsmodul 20 kann als drahtloses oder drahtgebundenes Kommunikationsmodul 20 ausgebildet sein. Beispielsweise kann das Bediengerät 10 über das Kommunikationsmodul 20 eine WLAN, eine Bluetooth, eine Infrarot und/oder eine Funkverbindung mit einem oder mehreren Feldgeräten 100 herstellen und/oder Daten bzw. Signale austauschen. Das Kommunikationsmodul 20 kann mehrere Kommunikationseinheiten aufweisen, welche über unterschiedliche Kommunikationsprotokolle mit weiteren Vorrichtungen und/oder dem Internet verbunden werden können. Beispielsweise kann das Bediengerät 10 über das Kommunikationsmodul 20 eine Internetverbindung herstellen und/oder mit dem Server 200 verbunden werden sowie über eine Bluetooth-Verbindung mit wenigstens einem Feldgerät 100 gekoppelt sein. Das Bediengerät 10 kann insbesondere für eine drahtlose Kommunikation mit einem oder mehreren Feldgeräten 100 eingerichtet sein. Alternativ oder zusätzlich kann das Bediengerät 10 jedoch auch für eine drahtgebundene Kommunikation mit einem oder mehreren Feldgeräten 100 eingerichtet sein. Zur Verbindung mit einem oder mehreren Feldgeräten 100 kann das Kommunikationsmodul 20 beispielsweise eine Ethernet-, eine LAN- (Local Area Network), eine WLAN- (Wireless Local Area Network), eine GPRS- (General Packet Radio Service), eine Mobilfunk-, eine LTE-(Long Term Evolution), eine 3G-, eine NBIoT, eine LPWAN-, eine Lora-, eine Bluetooth-, eine 4...20mA und/oder eine Infrarot-Verbindung herstellen. Auch kann das Bediengerät 10 über einen Feldbus, wie beispielsweise einen HART Bus, einen Profibus, einen FF-Bus, einen Modbus, einen IP basierten Bus, einen Ethernet-IP-Bus, einen PROFINET-Bus, einen seriellen Bus und/oder einen parallelen Bus mit einem oder mehreren Feldgeräten 100 und/oder mit dem Server 200 verbunden werden. Auch andere Verbindungen, z.B. über einen IO-Link und/oder eine USB-Verbindung, sind denkbar.

In dem Speicher 18 des Bediengeräts 10 kann wenigstens eine Zugriffsinformation für einen Zugriff auf wenigstens ein Feldgerät 100 hinterlegt sein. Insbesondere können in dem Speicher 18 mehrere Zugriffsinformationen für einen Zugriff auf mehrere Feldgeräte 100 hinterlegt sein. Jede Zugriffsinformation kann beispielsweise wenigstens eine Zugriffskennung zur Freigabe einer Bedienung wenigstens eines Feldgeräts 100 durch das Bediengerät 10 umfassen. Die Freigabe der Bedienung des Feldgeräts 100 kann beispielsweise ein Aufheben einer Bediensperre des Feldgeräts 100 umfassen. Die Zugriffskennung kann beispielsweise eine PIN, ein Zahlencode, ein Buchstabencode, ein Zahlen-Buchstabencode und/oder eine andere Kennung sein, bei deren Eingabe das Feldgerät 100 freigegeben werden kann. Auch kann vorgesehen sein, dass durch Eingabe der Zugriffskennung das Feldgerät 100 wieder gesperrt werden kann.

Alternativ oder zusätzlich kann die Zugriffsinformation wenigstens eine Verbindungskennung zum Herstellen der Kommunikationsverbindung zu dem wenigstens einen Feldgerät 100 umfassen. Die Kommunikationsverbindung kann etwa eine Bluetoothverbindung, eine Netzwerkverbindung und/oder eine Feldbusverbindung sein. Die Verbindungskennung kann etwa eine PIN, ein Zahlencode, ein Buchstabencode, ein Zahlen-Buchstabencode und/oder eine andere Kennung zum Herstellen einer der Kommunikationsverbindung sein. Auch kann die Verbindungskennung ein PSK (Pre-Shared Key) sein, mit Hilfe dessen das Bediengerät 10 mit einem Netzwerk verbunden werden kann, an welches auch das Feldgerät 100 angebunden ist.

Figur 1B zeigt schematisch ein Feldgerät 100 gemäß einem Ausführungsbeispiel.

Das Feldgerät 100 kann ein beliebiges Feldgerät 100 zur Bestimmung einer beliebigen Prozessvariable und/oder Messgröße, etwa in der Prozessautomation und/oder der Prozessindustrie, sein. Beispielsweise kann es sich bei dem Feldgerät 100 um ein Füllstandmessgerät zur Erfassung eines Füllstandes eines Mediums, etwa in einem Behälter, um ein Druckmessgerät zur Erfassung eines Druckes des Mediums, um ein Durchflussmessgerät zur Erfassung eines Durchflusses des Mediums, um ein Fließgeschwindigkeitsmessgerät zur Erfassung einer Fließgeschwindigkeit des Mediums, um ein Temperaturmessgerät und/oder um ein beliebiges anderes Feldgerät 100 handeln.

Das Feldgerät 100 weist einen Sensor 101 und/oder ein Sensorelement 101 zur Erfassung eines oder mehrerer Prozessvariablen auf.

Ferner weist das Feldgerät 100 eine Steuereinheit 102 und einen Speicher 104 auf. In dem Speicher 104 können Softwareinstruktionen und/oder ein Programmelement zur Steuerung des Feldgeräts 100 hinterlegt sein.

Das Feldgerät 100 weist ferner ein Kommunikationsmodul 106 auf, über welches das Feldgerät 100 mit dem Bediengerät 10 gekoppelt und/oder verbunden werden kann. Analog dem Bediengerät 10 bzw. dessen Kommunikationsmodul 20 kann auch das Kommunikationsmodul 106 des Feldgeräts 100 beispielsweise eine Ethernet-, eine LAN- (Local Area Network), eine WLAN- (Wireless Local Area Network), eine GPRS- (General Packet Radio Service), eine Mobilfunk-, eine LTE- (Long Term Evolution), eine 3G-, eine NBIoT, eine LPWAN-, eine Lora-, eine Bluetooth-, eine 4...20mA und/oder eine Infrarot-Verbindung mit dem Bediengerät 10 herstellen. Auch kann das Feldgerät 100 über einen Feldbus, wie beispielsweise einen HART Bus, einen Profibus, einen FF-Bus, einen Modbus, einen IP basierten Bus, einen Ethernet-IP-Bus, einen PROFINET-Bus, einen seriellen Bus und/oder einen parallelen Bus mit einem oder mehreren weiteren Feldgeräten 100, mit einem oder mehreren Bediengeräten 10 und/oder mit dem Server 200 verbunden werden. Auch andere Verbindungen, z.B. über einen IO-Link und/oder eine USB-Verbindung, sind denkbar

Figur 1C zeigt schematisch einen Server 200 gemäß einem Ausführungsbeispiel. Der Server 200 kann eine oder mehrere Rechenvorrichtungen aufweisen. Der Server 200 kann auch ein Servernetzwerk, etwa eine Cloud, oder eine beliebige andere Rechenvorrichtung bezeichnen.

Der Server 200 weist eine Steuereinheit 202 und ein Kommunikationsmodul 206 auf.

Über das Kommunikationsmodul 206 kann der Server 200 eine Kommunikationsverbindung mit einem oder mehreren Bediengeräten 10 und/oder mit einem oder mehreren Feldgeräten 100 herstellen. Insbesondere kann der Server 200 dazu eingerichtet sein, eine Internetverbindung und/oder Netzwerkverbindung mit einem oder mehreren Bediengeräten 10 herzustellen.

Der Server 200 weist ferner einen Speicher 204 auf, in welchem eine oder mehrere Zugriffsinformationen für einen Zugriff auf eines oder mehrere Feldgeräte 100 hinterlegt sein können. In dem Speicher des Servers 200 kann insbesondere ein Verwaltungsmodul 208 und/oder eine Benutzerkontenverwaltung 208 implementiert sein. In der Benutzerkontenverwaltung 208 und/oder dem Speicher 204 kann ein oder mehrere Benutzerkonten 208a-c für einen oder mehrere Benutzer hinterlegt sein. Insbesondere kann für jeden Benutzer, der auf dem Server 200 Zugriffsinformation(en) hinterlegt hat, ein Benutzerkonto 208a-c hinterlegt sein.

Jeder Benutzer kann sich mit einer persönlichen Kennung, etwa seiner Email-Adresse und/oder einem Benutzernamen, sowie mit einem Kennwort an dem ihm zugeordneten Benutzerkonto 208a-c anmelden, etwa über ein Bediengerät 10. Dies ermöglicht jedem Benutzer den vollen Zugriff auf die für ihn freigegebenen und/oder die mit seinem Benutzerkonto 208a-c verknüpften Zugriffsinformationen.

Der Server 200 kann insbesondere dazu eingerichtet sein, Zugriffsinformationen, welche lokal auf einem Bediengerät 10 eines Benutzers hinterlegt sind, mit den für den Benutzer in dessen Benutzerkonto 208a-c hinterlegten Zugriffsinformationen abzugleichen und/oder zu synchronisieren, etwa wenn sich ein Benutzer an seinem Benutzerkonto 208a-c angemeldet hat.

Figur 2 zeigt schematisch ein System 500 mit mehreren Bediengeräten 10a, 10b gemäß Figur 1A, mehreren Feldgeräten 100a, 100b gemäß Figur 1B und einem Server 200 gemäß Figur 1C.

Die in Figur 2 gezeigten Doppelpfeile illustrieren dabei schematisch eine Datenkommunikation, eine Kommunikation und/oder einen Datenaustausch zwischen den Komponenten des Systems 500.

Insbesondere weist das System 500 ein erstes Feldgerät 100a auf. Das erste Feldgerät 100a ist dabei über eine Kommunikationsverbindung mit einem ersten Bediengerät 10a verbunden und/oder gekoppelt. Die Kommunikationsverbindung kann dabei mittels des Kommunikationsmoduls 20 des Bediengeräts 10a und mittels des Kommunikationsmoduls 106 des Feldgeräts 100a hergestellt sein, wie in voranstehenden Figuren erläutert.

Ferner weist das System 500 ein zweites Feldgerät 100b auf. Das zweite Feldgerät 100b ist dabei über eine Kommunikationsverbindung mit einem zweiten Bediengerät 10b verbunden und/oder gekoppelt. Die Kommunikationsverbindung kann dabei mittels des Kommunikationsmoduls 20 des Bediengeräts 10b und mittels des Kommunikationsmoduls 106 des Feldgeräts 100b hergestellt sein, wie in voranstehenden Figuren erläutert.

Zum Herstellen der Kommunikationsverbindung können die Bediengeräte 10a, 10b die für einen Zugriff auf die jeweiligen Feldgeräte 100a, 100b erforderlichen Zugriffsinformationen verwenden. Diese Zugriffsinformationen können dabei jeweils lokal auf den Bediengeräten 10a, 10b hinterlegt sein. Jede Zugriffsinformation kann eine Zugriffskennung und/oder eine Verbindungskennung umfassen.

Alternativ oder zusätzlich können die Zugriffsinformationen auch auf dem Server 200 hinterlegt sein und eines oder beide Bediengeräte 10a, 10b können über eine Internetverbindung 201 und/oder Netzwerkverbindung 201 mit dem Server 200 gekoppelt sein, um die Zugriffsinformationen für die Feldgeräte 100a, 100b abrufen zu können und/oder um eine Kommunikationsverbindung zu den Feldgeräten 100a, 100b herzustellen.

Nachfolgend sind einige Aspekte des Systems 500 zusammengefasst. Für das Arbeiten mit dem Feldgerät 100a, 100b, etwa für eine Diagnose, eine Konfiguration oder dergleichen, werden regelmäßig PCs und Laptops mit entsprechenden Anwenderprogrammen, beispielsweise PACTware mit DTM, verwendet. Ergänzend oder alternativ kann das Arbeiten heute auch mit Tablets und/oder Smartphones mit entsprechenden Apps erfolgen. Wie in Figur 2 dargestellt ist, können derartige Bediengeräte 10a, 10b und deren Anwendungsprogramme und/oder Apps sowohl eine Verbindung zum Feldgerät 100a, 100b als auch eine Verbindung über ein Netzwerk 201 bzw. das Internet 201 zu einem Server 200 aufweisen. Der Server 200 kann hierbei als zentrale Datenbank für die Verwaltung der Zugriffsinformationen für einen Zugriff der Bediengeräte 10a, 10b auf die Feldgeräte 100a, 100b dienen. Bei dem Netzwerk 201 kann es sich selbstverständlich auch um ein WLAN, eine mobile Verbindung bzw. ein Mobilfunknetz, etwa basierend auf GPRS und/oder LTE, NBIoT, LPWAN und/oder Lora, handeln.

Die Bediengeräte 10a, 10b können bei Herstellen der Kommunikationsverbindung zu dem Server 200 und/oder bei Anmelden an dem jeweiligen Benutzerkonto 208a-c Zugriffinformationen zwischen mehreren Bediengeräten 10a-b eines Benutzers unter Zuhilfenahme des Servers 200 synchronisieren und/oder abgleichen. Das System 500 der Figur 2 kann ferner zum Teilen und/oder Weitergeben von Zugriffsinformationen unter verschiedenen Benutzern eingerichtet sein, wie nachfolgend exemplarisch bei Figur 3 erläutert.

Figur 3 zeigt schematisch ein System 500 zur Illustration von Schritten eines Verfahrens gemäß einem Ausführungsbeispiel.

Das System 500 der Figur 3 zeigt drei Bediengeräte 10a-c. Sofern nicht anders beschrieben, weisen die Bediengeräte 10a-c dieselben Merkmale wie die bezüglich der voranstehenden Figuren beschriebenen Bediengeräte auf.

Das Bediengerät 10a kann etwa einem Benutzer A, das Bediengerät 10b kann einem Benutzer B und das Bediengerät 10c kann einem Benutzer C zugeordnet sein. Die Bediengeräte 10a-c sind über ein Netzwerk 201, etwa das Internet 201, mit dem Server 200 verbunden, auf welchem ein Benutzerkonto 208a des Benutzers A, ein Benutzerkonto 208b des Benutzers B und ein Benutzerkonto 208c des Benutzers C hinterlegt sind.

Über das System 500 können beispielsweise Zugriffsinformationen mit einem externen Service-Techniker und/oder Zeitarbeiter geteilt werden, welcher nachfolgend exemplarisch als Benutzer B mit dem Bediengerät 10b bezeichnet ist.

Der Benutzer A kann dabei Inhaber der Zugriffsinformationen sein und über sein Bediengerät 10a und etwa über die Benutzerschnittstelle 12 auf dem Bediengerät 10a und/oder auf einer Konfigurationsseite seines Benutzerkontos 208a in einem Browserfenster seine Zugriffsinformationen je Feldgerät 100 verwalten. Insbesondere kann er Zugriffsinformationen einzelner Feldgeräte 100 markieren und diese für andere Personen, z. B. für Benutzer B, nutzbar machen indem er den markierten Zugriffsinformationen wenigstens ein Nutzerattribut und/oder eine Email-Adresse des Benutzers B zuordnet. Durch Abschließen des Vorgangs, etwa mit Betätigen einer Funktion "Teilen", kann auf dem Server 200 die entsprechende Nutzungsberechtigung für Benutzer B ausgelöst werden. Auch kann Benutzer B eine Benachrichtigung erhalten, dass ihm neue Zugriffsinformationen zugeteilt wurden.

Bei den genannten Nutzerattributen kann definiert werden, ob die Zugriffsinformationen dauerhaft oder zeitlich begrenzt zugeteilt werden sollen.

Ferner kann eine Einstellung gewählt werden, damit die zugeteilten Zugriffsinformationen für Benutzer B verborgen bleiben. Das heißt, Benutzer B kann damit zwar Zugang zu den definierten Feldgeräten 100 erhalten, die Zugriffsinformationen werden ihm aber nicht angezeigt.

Allgemein können somit Zugriffsinformationen mit anderen Personen geteilt werden, wobei das Teilen unterschiedliche Ausprägungen aufweisen kann, welche durch das wenigstens eine Nutzerattribut festgelegt sein können. Beispielsweise können Zugriffsinformationen dauerhaft geteilt werden, Zugriffsinformationen können zeitlich begrenzt erteilt werden, Zugriffsinformationen können "verborgen" zugeteilt werden, Zugriffsinformationen können sichtbar zugeteilt werden, Zugriffsinformationen können durch den Empfänger verändert werden, zugeordneten Zugriffsinformationen können wieder entzogen werden, und/oder geteilte Zugriffsinformationen können vom Empfänger nicht weitergeteilt werden. Damit können individuell zwischen beliebigen Benutzern Zugriffsinformationen auf sichere Weise geteilt werden.

In einem weiteren Beispiel können Zugriffsinformationen mit einem Kollegen geteilt werden, welcher exemplarisch als Benutzer C bezeichnet ist. Der Inhaber der Zugriffsinformationen, Benutzer A, kann über die Benutzerschnittstelle 12 auf seinem Bediengerät 10a und/oder auf den Konfigurationsseiten seines Benutzerkontos 208a, etwa in einem Browserfenster, seine Zugriffsinformationen je Feldgerät 100 verwalten. Insbesondere kann er Zugriffsinformationen einzelner Feldgeräte 100 markieren und diese für andere Personen, z. B. für Benutzer C, nutzbar machen indem er den markierten Zugriffsinformationen wenigstens ein Nutzerattribut und/oder die E-Mailadresse von Benutzer C zuordnet. Durch Abschließen des Vorgangs, etwa mit Betätigen einer Funktion "Teilen", kann auf dem Server 200 die entsprechende Nutzungsberechtigung für Benutzer C ausgelöst werden. Optional kann Benutzer C eine Benachrichtigung erhalten, dass ihm neue Zugriffsinformationen zugeteilt wurden. In diesem Szenario kann das Nutzattribut bevorzugt so gesetzt werden, dass die Nutzung dauerhaft erfolgt. Ferner kann hier eine Einstellung gewählt werden, damit die zugeteilten Zugriffsinformationen für Benutzer C sichtbar sind. Das heißt, Benutzer C kann sich damit Zugang zu den definierten Feldgeräten 100 verschaffen und er darf darüber hinaus auch die Zugriffsinformationen verändern. Wenn er Änderungen vornimmt, so können diese wieder an Benutzer A zurücksynchronisiert werden.

Für den Fall, dass Benutzer B oder C vorzeitig die Tätigkeiten an der Anlage beenden und entsprechend die Zugriffsinformationen nicht mehr verwenden dürfen, besteht für Benutzer A die Möglichkeit, diese zu entziehen. Auch hierfür kann er über sein Bediengerät 10a einzelne Feldgeräte 100 bzw. Zugriffsinformationen markieren und das Teilen für den Benutzer B und/oder C aufheben. Zusätzlich kann auch vorgesehen sein, dass ohne Vorauswahl alle mit Benutzer B oder C geteilten Zugriffsinformationen zurückgezogen werden können. Wenn dann ein Bediengerät 10b, 10c von Benutzer B oder C das nächste Mal mit dem Server 200 in Kontakt tritt, können die lokalen Zugriffsinformationen auf dem jeweiligen Bediengerät 10b, 10c gelöscht werden.

Dies erlaubt somit ein sicheres und effizientes Teilen von Zugriffsinformationen zwischen beliebigen Benutzern.

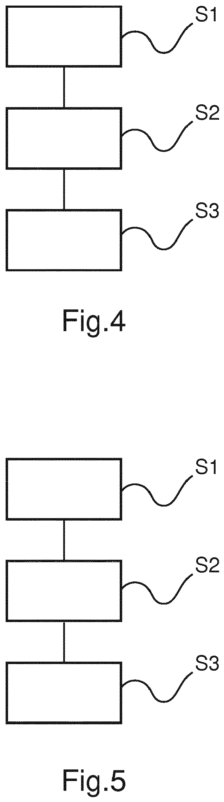

Figur 4 zeigt ein Flussdiagramm zur Illustration von Schritten eines Verfahrens zur Weitergabe einer Zugriffsinformation für einen Zugriff auf ein Feldgerät 100 der Prozessautomation gemäß einem Ausführungsbeispiel.

In einem Schritt S1 wird an einem Bediengerät 10a eines Benutzers wenigstens eine für den Benutzer erteilte Zugriffsinformation für einen Zugriff auf wenigstens ein Feldgerät 100 über das Bediengerät 10 festgelegt.

In einem weiteren Schritt S2 wird an dem Bediengerät 10a des Benutzers ein weiterer Benutzer zu der festgelegten wenigstens einen Zugriffsinformation; zugeordnet.

In einem weiteren Schritt S3 wird von dem Bediengerät 10a an einen Server 200 eine Zugriffsfreigabe gesendet, welche Informationen bezüglich der festgelegten wenigstens einen Zugriffsinformation und bezüglich des der festgelegten Zugriffsinformation zugeordneten weiteren Benutzers umfasst, so dass dem weiteren Benutzer basierend auf der Zugriffsfreigabe die wenigstens eine Zugriffsinformation über den Server 200 bereitgestellt wird.

Figur 5 zeigt ein Flussdiagramm zur Illustration von Schritten eines Verfahrens zur Weitergabe einer Zugriffsinformation für einen Zugriff auf ein Feldgerät 100 der Prozessautomation gemäß einem Ausführungsbeispiel.

In einem Schritt S1 wird eine von einem Bediengerät 10a eines Benutzers gesendete Zugriffsfreigabe mit einem Server 200 empfangen, auf welchem wenigstens eine Zugriffsinformation für einen Zugriff auf wenigstens ein Feldgerät 100 hinterlegt ist, wobei die Zugriffsfreigabe Informationen bezüglich der wenigstens einen Zugriffsinformation und bezüglich eines der wenigstens einen Zugriffsinformation zugeordneten weiteren Benutzers umfasst.

In einem weiteren Schritt S2 wird auf dem Server 200 eine Nutzungsberechtigung basierend auf der empfangenen Zugriffsfreigabe für den der wenigstens einen Zugriffsinformation zugeordneten weiteren Benutzer erstellt.

In einem Schritt S3 wird die wenigstens einen Zugriffsinformation von dem Server 200 an den weiteren Benutzer bereitgestellt.

## Patentansprüche

1. Verfahren zur Weitergabe einer Zugriffsinformation für einen Zugriff auf ein Feldgerät (100) der Prozessautomation, das Verfahren aufweisend die folgenden Schritte:
Festlegen, an einem Bediengerät (10, 10a) eines Benutzers, wenigstens einer für den Benutzer erteilten Zugriffsinformation für einen Zugriff auf wenigstens ein Feldgerät (100) über das Bediengerät (10, 10a);
Zuordnen, an dem Bediengerät (10, 10a) des Benutzers, eines weiteren Benutzers zu der festgelegten wenigstens einen Zugriffsinformation; und
Senden einer Zugriffsfreigabe, welche Informationen bezüglich der festgelegten wenigstens einen Zugriffsinformation und bezüglich des der festgelegten Zugriffsinformation zugeordneten weiteren Benutzers umfasst, von dem Bediengerät (10, 10a) an einen Server (200), so dass dem weiteren Benutzer basierend auf der Zugriffsfreigabe die wenigstens eine Zugriffsinformation bereitgestellt wird.

2. Verfahren nach Anspruch 1,
wobei die wenigstens eine Zugriffsinformation wenigstens eine Zugriffskennung zur Freigabe einer Bedienung des wenigstens einen Feldgeräts (100) umfasst.

3. Verfahren nach einem der voranstehenden Ansprüche,
wobei die wenigstens eine Zugriffsinformation wenigstens eine Verbindungskennung zum Herstellen einer Kommunikationsverbindung zu dem wenigstens einen Feldgerät (100) umfasst.

4. Verfahren nach einem der voranstehenden Ansprüche, ferner aufweisend:
Anmelden, über das Bediengerät (10, 10a) des Benutzers, an einem dem Benutzer zugeordneten Benutzerkonto (208a) auf dem Server (200), wobei in dem Benutzerkonto eine oder mehrere Zugriffsinformationen für einen Zugriff des Benutzers auf ein oder mehrere Feldgeräte verwaltet sind.

5. Verfahren nach einem der voranstehenden Ansprüche, ferner aufweisend:
Bereitstellen, auf dem Bediengerät (10, 10a) des Benutzers, einer Liste einer Mehrzahl von Zugriffsinformationen für einen Zugriff auf eine Mehrzahl von Feldgeräten (100) über das Bediengerät (10, 10a), und
wobei der Schritt des Festlegens der wenigstens einen für den Benutzer erteilten Zugriffsinformation ein Auswählen und/oder Markieren, auf dem Bediengerät (10, 10a) des Benutzers, der wenigstens einen für den Benutzer erteilten Zugriffsinformation in der Liste umfasst.

6. Verfahren nach Anspruch 5,
wobei die Liste in einem Speicher (18) des Bediengeräts (10, 10a) des Benutzers hinterlegt ist; und/oder
wobei die Liste über eine Internetverbindung und/oder Netzwerkverbindung des Bediengeräts (10, 10a) zu dem Server (200) bereitgestellt wird.

7. Verfahren nach einem der voranstehenden Ansprüche, ferner aufweisend:
Zuordnen wenigstens eines Nutzerattributs zu der festgelegten wenigstens einen Zugriffsinformation, wobei das wenigstens eine Nutzerattribut eine Nutzungsberechtigung der festgelegten wenigstens einen Zugriffsinformation durch den weiteren Benutzer definiert; und
wobei die von dem Bediengerät (10, 10a) an den Server (200) gesendete Zugriffsfreigabe ferner Informationen bezüglich des wenigstens einen Nutzerattributs umfasst.

8. Verfahren nach Anspruch 7,
wobei die in dem wenigstens einen Nutzerattribut definierte Nutzungsberechtigung wenigstens ein Element ausgewählt aus der Gruppe bestehend aus:
- einer dauerhaften Berechtigung zur Nutzung der festgelegten Zugriffsinformation durch den weiteren Benutzer;
- einer temporären Berechtigung zur Nutzung der festgelegten Zugriffsinformation durch den weiteren Benutzer;
- einer Berechtigung zur Nutzung der festgelegten Zugriffsinformation durch den weiteren Benutzer ohne Berechtigung zur Einsichtnahme der festgelegten Zugriffsinformation durch den weiteren Benutzer;
- einer Berechtigung zur Nutzung der festgelegten Zugriffsinformation durch den weiteren Benutzer mit Berechtigung zur Einsichtnahme der festgelegten Zugriffsinformation durch den weiteren Benutzer; und
- einer Berechtigung zur Veränderung der festgelegten Zugriffsinformation durch den weiteren Benutzer
umfasst.

9. Verfahren nach einem der voranstehenden Ansprüche,
wobei der Schritt des Zuordnens des weiteren Benutzers zu der festgelegten wenigstens einen Zugriffsinformation ein Zuordnen einer Email-Adresse des weiteren Benutzers umfasst.

10. Verfahren nach einem der voranstehenden Ansprüche, weiter aufweisend:
Senden einer Benachrichtigung an den weiteren Benutzer und/oder an eine dem weiteren Benutzer zugeordnete Email-Adresse.

11. Verfahren nach Anspruch 10,
wobei die Benachrichtigung von dem Bediengerät (10, 10a) des Benutzers an die dem weiteren Benutzer zugeordnete Email-Adresse gesendet wird.

12. Verfahren nach einem der Ansprüche 10 oder 11,
wobei die von dem Bediengerät (10, 10a) an den Server (200) gesendete Zugriffsfreigabe ferner Informationen bezüglich der Email-Adresse des weiteren Benutzers umfasst; und
wobei das Senden der Zugriffsfreigabe von dem Bediengerät (10, 10a) an den Server den Server zum Senden einer Benachrichtigung an die dem weiteren Benutzer zugeordnete Email-Adresse veranlasst.

13. Verfahren nach einem der voranstehenden Ansprüche, ferner aufweisend:
Senden, mit dem Bediengerät (10, 10a) an den Server (200), einer Zugriffsentziehung zum Aufheben einer Nutzungsberechtigung der wenigstens einen Zugriffsinformation durch den weiteren Benutzer.

14. Bediengerät (10, 10a-c), mit Mittel die geeignet sind, die Schritte des Verfahrens nach einem der voranstehenden Ansprüche auszuführen.

15. Programmelement, umfassend Befehle, die bewirken, dass das Bediengerät (10, 10a-c) des Anspruchs 14 die Verfahrensschritte nach einem der Ansprüche 1 bis 13 ausführt.

16. Verfahren zur Weitergabe einer Zugriffsinformation für einen Zugriff auf ein Feldgerät (100) der Prozessautomation, das Verfahren aufweisend die folgenden Schritte:
Empfangen einer von einem Bediengerät (10, 10a) eines Benutzers gesendeten Zugriffsfreigabe mit einem Server (200), auf welchem wenigstens eine Zugriffsinformation für einen Zugriff auf wenigstens ein Feldgerät (100) hinterlegt ist, wobei die Zugriffsfreigabe Informationen bezüglich der wenigstens einen Zugriffsinformation und bezüglich eines der wenigstens einen Zugriffsinformation zugeordneten weiteren Benutzers umfasst;
Erstellen und/oder Hinterlegen, auf dem Server (200), einer Nutzungsberechtigung basierend auf der empfangenen Zugriffsfreigabe für den der wenigstens einen Zugriffsinformation zugeordneten weiteren Benutzer; und
Bereitstellen der wenigstens einen Zugriffsinformation von dem Server (200) an den weiteren Benutzer.

17. Verfahren nach Anspruch 16, wobei die empfangene Zugriffsfreigabe ferner Informationen bezüglich wenigstens eines der wenigstens einen Zugriffsinformation und/oder dem weiteren Benutzer zugeordneten Nutzerattributs umfasst; und
wobei die Nutzungsberechtigung basierend auf dem wenigstens einen Nutzerattribut auf dem Server (200) erstellt und/oder hinterlegt wird.

18. Verfahren nach einem der Ansprüche 16 bis 17,
wobei der Schritt des Bereitstellens der wenigstens einen Zugriffsinformation an den weiteren Benutzer ein Senden der wenigstens einen Zugriffsinformation von dem Server (200) an ein weiteres Bediengerät (10, 10b, 10c) des weiteren Benutzers umfasst; und/oder
wobei der Schritt des Bereitstellens der wenigstens einen Zugriffsinformation an den weiteren Benutzer ein Ermöglichen eines Zugriffs des weiteren Benutzers auf die auf dem Server (200) hinterlegte wenigstens eine Zugriffsinformation über ein weiteres Bediengerät (10, 10b, 10c) des weiteren Benutzers umfasst.

19. Verfahren nach einem der Ansprüche 16 bis 18,
wobei auf dem Server (200) ein Benutzerkonto (208b, 208c) des weiteren Benutzers hinterlegt ist; und
wobei der Schritt des Bereitstellens der wenigstens einen Zugriffsinformation an den weiteren Benutzer ein Verknüpfen der wenigstens einen Zugriffsinformation mit dem Benutzerkonto (208b, 208c) des weiteren Benutzers umfasst.

20. Server (200), mit Mittel die geeignet sind, die Schritte des Verfahrens nach einem der Ansprüche 16 bis 19 auszuführen.

21. Programmelement, umfassend Befehle, die bewirken, dass der Server (200) des Anspruchs 20 die Verfahrensschritte nach einem der Ansprüche 16 bis 19 ausführt.

## Claims

1. A method of transferring access information for an access to a field device (100) of process automation, the method comprising the steps of:
specifying, on an operating device (10, 10a) of a user, at least one access information given for the user for accessing at least one field device (100) via the operating device (10, 10a);
associating, on the operating device (10, 10a) of the user, a further user with the specified at least one access information; and
sending an access release, which comprises information regarding the specified at least one access information and regarding the further user associated with the specified access information, from the operating device (10, 10a) to a server (200), such that the at least one access information is provided to the further user based on the access release.

2. The method according to claim 1,
wherein the at least one access information comprises at least one access identifier for releasing an operation of the at least one field device (100).

3. The method according to any one of the preceding claims,
wherein the at least one access information comprises at least one connection identifier for establishing a communication connection to the at least one field device (100).

4. The method according to any one of the preceding claims, further comprising:
logging on, via the operating device (10, 10a) of the user, to a user account (208a) associated with the user on the server (200), wherein the user account manages one or more access information for a access of the user to one or more field devices.

5. The method according to any one of the preceding claims, further comprising:
providing, on the operating device (10, 10a) of the user, a list of a plurality of access information for accessing a plurality of field devices (100) via the operating device (10, 10a), and
wherein the step of specifying the at least one access information given for the user comprises selecting and/or marking, on the operating device (10, 10a) of the user, at least one access information given for the user in the list.

6. The method according to claim 5,
wherein the list is stored in a memory (18) of the operating device (10, 10a) of the user; and/or
wherein the list is provided to the server (200) via an Internet connection and/or network connection of the operating device (10, 10a).

7. The method according to any one of the preceding claims, further comprising:
associating at least one user attribute with the specified at least one access information, wherein the at least one user attribute defines a use authorization of the specified at least one access information by the further user; and
wherein the access release sent from the operating device (10, 10a) to the server (200) further comprises information regarding the at least one user attribute.

8. The method according to claim 7,
wherein the use authorization defined in the at least one user attribute comprises at least one element selected from the group consisting of:
- a permanent authorization to use the specified access information by the further user;
- a temporary authorization to use the specified access information by the further user;
- an authorization to use the specified access information by the further user without authorization to view the specified access information by the further user;
- an authorization to use the specified access information by the further user with authorization to view the specified access information by the further user; and
- an authorization to change the specified access information by the further user.

9. The method according to any one of the preceding claims,
wherein the step of associating the further user with the specified at least one access information comprises associating an e-mail address of the further user.

10. The method according to any one of the preceding claims, further comprising:
sending a notification to the further user and/or to an email address associated with the further user.

11. The method according to claim 10,
wherein the notification is sent from the operating device (10, 10a) of the user to the e-mail address associated with the further user.

12. The method according to any one of claims 10 or 11,
wherein the access release sent from the operating device (10, 10a) to the server (200) further comprises information regarding the email address of the further user; and
wherein the access release sent from the operating device (10, 10a) to the server causes the server to send a notification to the e-mail address associated with the further user.

13. The method according to any one of the preceding claims, further comprising:
sending, with the operating device (10, 10a) to the server (200), an access cancellation for canceling a use authorization of the at least one access information by the further user.

14. An operating device (10, 10a-c) with means suitable to perform steps of the method according to any one of the preceding claims.

15. A program element, comprising instructions which cause the operating device (10, 10a-c) of claim 14 to perform steps of the method of any one of claims 1 to 13.

16. A method of transferring access information for an access to a field device (100) of process automation, the method comprising the following steps:
receiving an access release sent by an operating device (10, 10a) of a user to a server (200) on which at least one access information for accessing at least one field device (100) is stored, wherein the access release comprises information regarding the at least one access information and regarding a further user associated with the at least one access information;
establishing and/or storing, on the server (200), a use authorization for the further user associated with the at least one access information based on the received access release; and
providing the at least one access information from the server (200) to the further user.

17. The method of claim 16,
wherein the received access release further comprises information regarding at least one user attribute associated with the at least one access information and/or the further user; and
wherein the use authorization is established and/or stored on the server (200) based on the at least one user attribute.

18. The method according to any one of claims 16 to 17,
wherein the step of providing the at least one access information to the further user comprises sending the at least one access information from the server (200) to a further operating device (10, 10b, 10c) of the further user; and/or
wherein the step of providing the at least one access information to the further user comprises enabling access of the further user to the at least one access information stored on the server (200) via the further operating device (10, 10b, 10c) of the further user.

19. The method according to any one of claims 16 to 18,
wherein a user account (208b, 208c) of the further user is stored on the server (200); and
wherein the step of providing the at least one access information to the further user comprises linking the at least one access information to the user account (208b, 208c) of the further user.

20. A server (200) with means suitable to perform steps of the method according to any one of claims 16 to 19.

21. A program element comprising instructions that cause the server (200) of claim 20 to perform steps of the method according to any one of claims 16 to 19.

## Revendications

1. Procédé de transmission d'une information d'accès permettant d'accéder à un appareil de terrain (100) de l'automatisation des processus, le procédé comportant les étapes suivantes :
la détermination, sur un appareil de commande (10, 10a) d'un utilisateur, d'au moins une information d'accès donnée audit utilisateur laquelle permet d'accéder, par l'intermédiaire de l'appareil de commande (10, 10a), à au moins un appareil de terrain (100) ;
l'association, sur l'appareil de commande (10, 10a) dudit utilisateur, d'un autre utilisateur à l'au moins une information d'accès déterminée ; et
l'envoi d'une validation d'accès, laquelle comprend des informations concernant l'au moins une information d'accès déterminée et concernant l'autre utilisateur associé à l'information d'accès déterminée, depuis l'appareil de commande (10, 10a) à un serveur (200), faisant en sorte que,
sur la base de ladite validation d'accès, ladite au moins une information d'accès soit mise à disposition dudit autre utilisateur.

2. Procédé selon la revendication 1,
ladite au moins une information d'accès comprenant au moins un code d'accès permettant d'activer un dispositif de commande de l'au moins un appareil de terrain (100).

3. Procédé selon l'une des revendications précédentes, ladite au moins une information d'accès comprenant au moins un code de connexion permettant d'établir une connexion de communication vers l'au moins un appareil de terrain (100).

4. Procédé selon l'une des revendications précédentes, comportant en outre :
la connexion, par l'intermédiaire de l'appareil de commande (10, 10a) dudit utilisateur, à un compte d'utilisateur (208a) qui est associé audit utilisateur et qui est situé sur le serveur (200), une ou plusieurs informations d'accès permettant audit utilisateur d'accéder à un ou plusieurs appareils de terrain étant gérées au sein dudit compte d'utilisateur.

5. Procédé selon l'une des revendications précédentes, comportant en outre :
la mise à disposition, sur l'appareil de commande (10, 10a) dudit utilisateur, d'une liste d'une pluralité d'informations d'accès permettant d'accéder, par l'intermédiaire de l'appareil de commande (10, 10a), à une pluralité d'appareils de terrain (100), et
l'étape de détermination de l'au moins une information d'accès donnée audit utilisateur comprenant une sélection et/ou un marquage dans ladite liste, sur l'appareil de commande (10, 10a) de l'utilisateur, de l'au moins une information d'accès donnée audit utilisateur.

6. Procédé selon la revendication 5,
ladite liste étant enregistrée dans une mémoire (18) de l'appareil de commande (10, 10a) dudit utilisateur ; et/ou
ladite liste étant mise à disposition par l'intermédiaire d'une connexion via internet et/ou connexion de réseau établie entre l'appareil de commande (10, 10a) et le serveur (200).

7. Procédé selon l'une des revendications précédentes, comportant en outre :
l'association d'au moins une caractéristique d'utilisateur à l'au moins une information d'accès déterminée, ladite au moins une caractéristique d'utilisateur définissant un droit d'utilisation de ladite au moins une information d'accès par ledit autre utilisateur ; et
la validation d'accès, qui est envoyée depuis l'appareil de commande (10, 10a) au serveur (200), comprenant en outre des informations concernant ladite au moins une caractéristique d'utilisateur.

8. Procédé selon la revendication 7,
le droit d'accès, qui est défini au sein de ladite au moins une caractéristique d'utilisateur, comprenant au moins un élément choisi dans le groupe constitué par :
- un droit permanent d'utilisation de l'information d'accès déterminée, par ledit autre utilisateur ;
- un droit temporaire d'utilisation de l'information d'accès déterminée, par ledit autre utilisateur ;
- un droit d'utilisation de l'information d'accès déterminée, par ledit autre utilisateur sans que ledit autre utilisateur soit autorisé à consulter l'information d'accès déterminée ;
- un droit d'utilisation de l'information d'accès déterminée, par ledit autre utilisateur, ledit autre utilisateur étant autorisé à consulter l'information d'accès déterminée ; et
- un droit de modification de l'information d'accès déterminée, par ledit autre utilisateur.

9. Procédé selon l'une des revendications précédentes,
l'étape d'association dudit autre utilisateur à l'au moins une information d'accès déterminée comprenant l'association d'une adresse électronique dudit autre utilisateur.

10. Procédé selon l'une des revendications précédentes, comportant également :
l'envoi d'une notification audit autre utilisateur et/ou à une adresse électronique associée audit autre utilisateur.

11. Procédé selon la revendication 10,
ladite notification étant envoyée depuis l'appareil de commande (10, 10a) dudit utilisateur à l'adresse électronique associée audit autre utilisateur.

12. Procédé selon l'une des revendications 10 ou 11,
la validation d'accès, qui est envoyée depuis l'appareil de commande (10, 10a) au serveur (200), comprenant en outre des informations concernant l'adresse électronique dudit autre utilisateur; et
l'envoi de ladite validation d'accès, depuis l'appareil de commande (10, 10a) audit serveur, faisant en sorte que ledit serveur envoie une notification à l'adresse électronique associée audit autre utilisateur.

13. Procédé selon l'une des revendications précédentes, comportant en outre :
l'envoi, au moyen de l'appareil de commande (10, 10a) à destination du serveur (200), d'un retrait d'accès destiné à annuler un droit d'utilisation de ladite au moins une information d'accès par ledit autre utilisateur.

14. Appareil de commande (10, 10a-c) comportant des moyens qui sont aptes à mettre en œuvre les étapes du procédé selon l'une des revendications précédentes.

15. Elément de logiciel, comprenant des commandes qui font en sorte que l'appareil de commande (10, 10a-c) de la revendication 14 mette en œuvre les étapes de procédé selon l'une des revendications 1 à 13.

16. Procédé de transmission d'une information d'accès permettant d'accéder à un appareil de terrain (100) de l'automatisation des processus, le procédé comportant les étapes suivantes :
la réception d'une validation d'accès, qui est envoyée par un appareil de commande (10, 10a) d'un utilisateur, au moyen d'un serveur (200) sur lequel est enregistrée au moins une information d'accès permettant d'accéder à un moins un appareil de terrain (100), ladite validation d'accès comprenant des informations concernant ladite au moins une information d'accès et concernant un autre utilisateur qui est associé à ladite au moins une information d'accès ;
la création et/ou enregistrement, sur le serveur (200), d'un droit d'accès qui est basé sur la validation d'accès reçue et
qui est destiné audit autre utilisateur associé à ladite au moins une information d'accès; et
la mise à disposition, par le serveur (200), de ladite au moins une information d'accès audit autre utilisateur.

17. Procédé selon la revendication 16, la validation d'accès reçue comprenant en outre des informations concernant au moins une caractéristique d'utilisateur associée à ladite au moins une information d'accès et/ou à audit autre utilisateur; et ledit droit d'utilisation étant créé et/ou enregistré, sur la base de ladite au moins une caractéristique d'utilisateur, sur le serveur (200).

18. Procédé selon l'une des revendications 16 à 17,
l'étape de la mise à disposition de ladite au moins une information d'accès audit autre utilisateur comprenant un envoi de ladite au moins une information d'accès depuis le serveur (200) à un autre appareil de commande (10, 10b, 10c) dudit autre utilisateur; et/ou
l'étape de la mise à disposition de ladite au moins une information d'accès audit autre utilisateur comprenant une autorisation d'accès par ledit autre utilisateur, au moyen d'un autre appareil de commande (10, 10b, 10c) dudit autre utilisateur, à ladite au moins une information d'accès enregistrée sur le serveur (200).

19. Procédé selon l'une des revendications 16 à 18,
un compte d'utilisateur (208b, 208c) dudit autre utilisateur étant enregistré sur le serveur (200) ; et
l'étape de la mise à disposition de ladite au moins une information d'accès audit autre utilisateur comprenant l'établissement d'un lien entre ladite au moins une information d'accès et le compte d'utilisateur (208b, 208c) dudit autre utilisateur.

20. Serveur (200) comportant des moyens qui sont aptes à mettre en œuvre les étapes du procédé selon l'une des revendications 16 à 19.

21. Elément de logiciel, comprenant des commandes qui font en sorte que le serveur (200) de la revendication 20 mette en œuvre les étapes de procédé selon l'une des revendications 16 à 19.
